(19) Europäisches Patentamt
European Patent Office
Office européen des brevets

(11) EP 3 037 841 A1

(12) **EUROPEAN PATENT APPLICATION**
published in accordance with Art. 153(4) EPC

(43) Date of publication:
29.06.2016 Bulletin 2016/26

(51) Int Cl.:
*G01S 7/526* (2006.01)       *G01S 7/52* (2006.01)
*G01S 15/93* (2006.01)       *G08G 1/16* (2006.01)

(21) Application number: 14837404.4

(22) Date of filing: 22.08.2014

(86) International application number:
PCT/JP2014/004337

(87) International publication number:
WO 2015/025527 (26.02.2015 Gazette 2015/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 23.08.2013 JP 2013173578

(71) Applicant: Panasonic Intellectual Property
Management Co., Ltd.
Osaka-shi, Osaka 540-6207 (JP)

(72) Inventors:
• NARUSE, Hayato
Osaka 540-6207 (JP)
• SAGARA, SHOGO
Osaka 540-6207 (JP)
• UEDA, Akitoshi
Osaka 540-6207 (JP)

(74) Representative: Appelt, Christian W.
Boehmert & Boehmert
Anwaltspartnerschaft mbB
Patentanwälte Rechtsanwälte
Pettenkoferstrasse 20-22
80336 München (DE)

(54) **OBJECT DETECTION DEVICE FOR VEHICLE**

(57) The objective of the present invention is to propose a vehicle-dedicated object detection device of suppressing false detection of an object caused by dirt on the wave transceiver. The vehicle-dedicated object detection device (**10A**) of one aspect according to the present invention includes a wave transceiver (**1**) and a controller (**2**). The controller (**2**) includes a transmitter (**3**), a receiver (**4**), a detector (**5**), a setter (**6**) for setting a detection start time, and a determiner (**7**). The determiner (**7**) determines whether the wave transceiver (**1**) is dirty, based on an amplitude of the received-wave signal in a first time period from a time of starting transmission of an ultrasonic wave to the detection start time. The detector (**5**) calculates a distance from the wave transceiver (**1**) to an object (**A1**) when it is determined that the wave transceiver (**1**) is not dirty and when a current time passes the detection start time.

FIG. 1

EP 3 037 841 A1

## Description

## Technical Field

The present invention relates to vehicle-dedicated object detection devices and in particular to a vehicle-dedicated object detection device for detecting an object present in a vicinity of a vehicle.

## Background Art

In the past, there has been known a vehicle-dedicated object detection device which is to be mounted to a vehicle such as an automobile to detect an object in a vicinity of the vehicle. As the vehicle-dedicated object detection device, there has been proposed a parking space monitoring device for assisting parking of a vehicle (disclosed in Document 1 [JP 2009-234294 A]). Such a parking space monitoring device is to detect an obstacle present in a vicinity of a vehicle with one or more ultrasonic sensors to transmit and receive an ultrasonic wave.

The parking space monitoring device disclosed in Document 1 is configured to transmit an ultrasonic wave from the ultrasonic wave sensor at given intervals and receive an ultrasonic wave (reflected wave) reflected by the obstacle. Further, the parking space monitoring device is configured to an obstacle present in a vicinity of a vehicle, based on the reflected wave from the obstacle.

However, the above parking space monitoring device detects an obstacle in a vicinity of a vehicle based on the reflected wave from the obstacle. For example, there is a problem that false detection of such an obstacle may be caused by dirt on the ultrasonic wave sensor (wave transceiver), for example.

## Summary of Invention

The objective of the present invention is to propose a vehicle-dedicated object detection device of suppressing false detection of an object caused by dirt on the wave transceiver.

The vehicle-dedicated object detection device of one aspect according to the present invention includes: a wave transceiver for transmitting and receiving an ultrasonic wave; and a controller for controlling the wave transceiver. The controller includes: a transmitter for transmitting a wave-transmitting signal for allowing the wave transceiver to transmit an ultrasonic wave; and a receiver for receiving a received-wave signal depending on an ultrasonic wave received by the wave transceiver. The controller further includes a detector for performing detection of an object and calculation of a distance from the wave transceiver to the object, based on the received-wave signal from the receiver. The controller further includes: a setter for setting a detection start time at which the detector starts detection of the object; and a determiner for determining whether the wave transceiver is dirty. The determiner is configured to, based on an amplitude of the received-wave signal in a first time period from a time at which the wave transceiver starts to transmit an ultrasonic wave to the detection start time, determine whether the wave transceiver is dirty. The detector is configured to, when the determiner determines that the wave transceiver is not dirty and when a current time passes the detection start time preliminarily set by the setter, start detection of the object and calculation of the distance from the wave transceiver to the object.

## Brief Description of Drawings

FIG. 1 is a schematic configuration diagram of a vehicle-dedicated object detection device of **Embodiment 1**.
FIG. 2A is a waveform chart of a wave-transmitting signal transmitted from a transmitter of the vehicle-dedicated object detection device of **Embodiment 1**.
FIG. 2B is a waveform chart of a received-wave signal received by a receiver of the vehicle-dedicated object detection device of **Embodiment 1**.
FIG. 3A is a waveform chart of an example of the received-wave signal in a case where a wave transceiver of the vehicle-dedicated object detection device of **Embodiment 1** is not dirty.
FIG. 3B is a waveform chart of an example of the received-wave signal in a case where the wave transceiver of the vehicle-dedicated object detection device of **Embodiment 1** is dirty.
FIG. 3C is a waveform chart of another example of the received-wave signal in the case where the wave transceiver of the vehicle-dedicated object detection device of **Embodiment 1** is dirty.
FIG. 4 is a flow chart of an operation of the vehicle-dedicated object detection device of **Embodiment 1**.
FIG. 5 is a schematic configuration diagram of a vehicle-dedicated object detection device of **Embodiment 2**.
FIG. 6A is a waveform chart of a wave-transmitting signal transmitted from a transmitter of the vehicle-dedicated object detection device of **Embodiment 2**.
FIG. 6B is a waveform chart of a reference signal represented by information preliminarily stored in a second memory of the vehicle-dedicated object detection device of **Embodiment 2**.
FIG. 7A is a waveform chart of a wave-transmitting signal transmitted from a transmitter of the vehicle-dedicated object detection device of **Embodiment 2**.
FIG. 7B is a waveform chart of another reference signal represented by information preliminarily stored in the second memory of the vehicle-dedicated object detection device of **Embodiment 2**.
FIG. 8A is a waveform chart of a wave-transmitting signal transmitted from a transmitter of the vehicle-dedicated object detection device of **Embodiment 2**.

**FIG. 8B** is a waveform chart of another reference signal represented by information preliminarily stored in the second memory of the vehicle-dedicated object detection device of **Embodiment 2**.

**FIG. 9** is a flow chart of an operation of the vehicle-dedicated object detection device of **Embodiment 2**.

**Description of Embodiments**

**(Embodiment 1)**

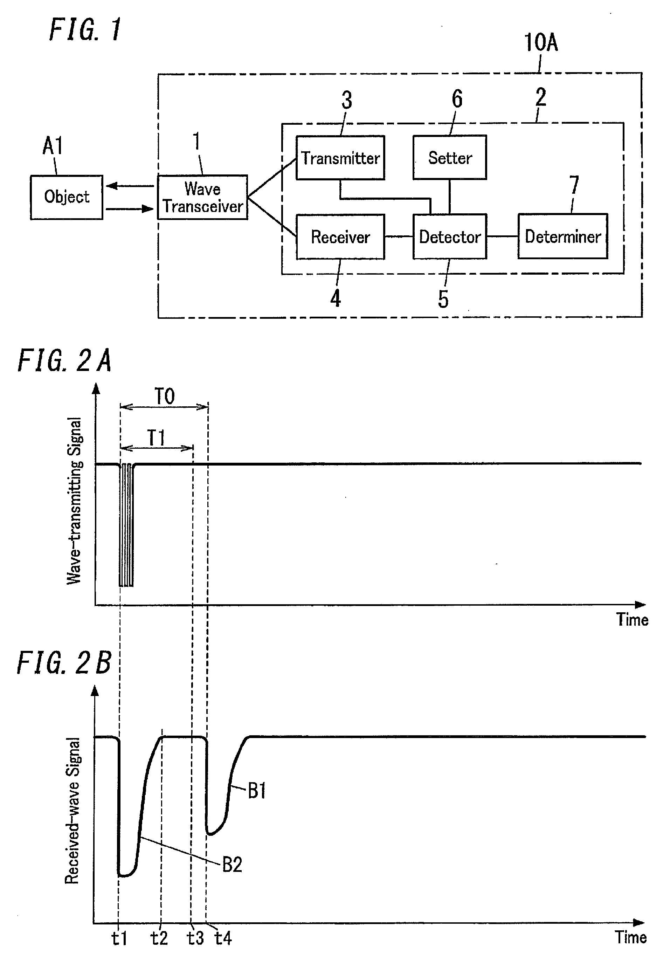

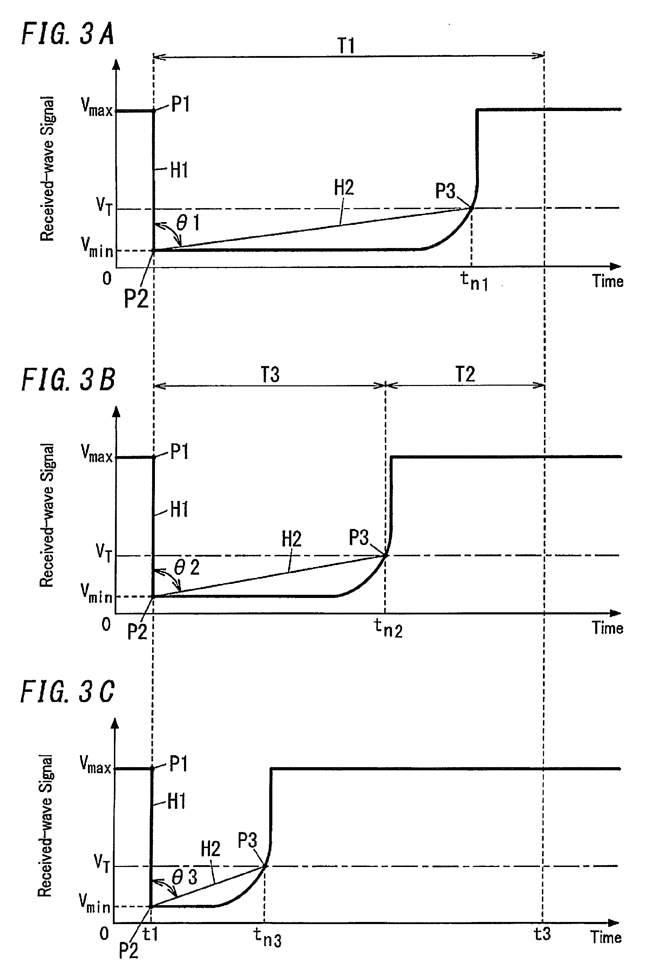

Hereinafter, the vehicle-dedicated object detection device **10A** of the present embodiment is described with reference to **FIG. 1**, **FIG**. **2A** to **FIG**. **2B**, and **FIG**. **3A** to **FIG. 3C**.

The vehicle-dedicated object detection device **10A** includes a wave transceiver **1** for transmitting and receiving an ultrasonic wave, and a controller **2** for controlling the wave transceiver **1**.

The wave transceiver **1** may be constituted by a microphone, for example. The wave transceiver **1** may be situated in the front or back of a vehicle, for example. Note that, the wave transceiver **1** is not limited to this configuration, but may be constituted by a known ultrasonic transducer (e.g., an ultrasonic transducer including one or more piezoelectric vibrators), for example.

The controller **2** may be realized by a microcomputer, for example. Such a microcomputer may store appropriate programs.

The controller **2** includes a transmitter **3** for transmitting a wave-transmitting signal for allowing the wave transceiver **1** to transmit an ultrasonic wave, and a receiver **4** for receiving a received-wave signal depending on the ultrasonic wave received by the wave transceiver **1**. Further, the controller **2** includes a detector **5** for performing detection of an object **A1** and calculation of a distance from the wave transceiver **1** to the object **A1**, based on the received-wave signal from the receiver **4**. Additionally, the controller **2** includes a setter **6** for setting a detection start time **t3** (shown in **FIG. 2B**) at which the detector **5** starts detection of the object **A1**, and a determiner **7** for determining whether the wave transceiver **1** is dirty.

The transmitter **3** is configured to transmit the wave-transmitting signal which may be a pulse signal, for example. The wave transceiver **1** transmits the ultrasonic wave in response to the wave-transmitting signal from the transmitter **3**. Note that, in the vehicle-dedicated object detection device **10A**, the wave-transmitting signal is a pulse signal, but may not be limited to this.

The receiver **4** includes an amplifier for amplifying the received-wave signal from the wave transceiver **1**. The receiver **4** is configured to amplify the received-wave signal from the wave transceiver **1** with the amplifier appropriately, and then output an amplified received-wave signal to the detector **5**.

The detector **5** detects the object **A1** present in a vicinity of the vehicle, when the received-wave signal from the receiver **4** includes a reflected component **B1** (shown in **FIG. 2B**) derived from the object **A1**. Note that, in **FIG. 2B**, B2 represents an echo component derived from the wave transceiver **1** included in the received-wave signal from the receiver **4**. Further, in **FIG. 2B**, t1 represents a time at which the wave transceiver **1** starts to transmit the ultrasonic wave.

Further, the detector **5** includes a clock for measuring time from the time at which the wave transceiver **1** starts to transmit the ultrasonic wave. The detector **5** starts to perform detection of the object **A1** when the clock indicates that a current time is the detection start time **t3**. According to the vehicle-dedicated object detection device **10A**, it is possible to prevent the detector **5** from misidentifying the echo component **B2** derived from the wave transceiver **1** included in the received-wave signal from the receiver **4** as the reflected component **B1** derived from the object **A1** included in the received-wave signal.

In the vehicle-dedicated object detection device **10A**, the detection start time **t3** is set to time later than time **t2** (shown in **FIG. 2B**) at which a variation of the received-wave signal caused by the echo component **B2** derived from the wave transceiver **1** ends, but may not be limited to this. The detection start time **t3** may be set to time same as the time **t2** at which the variation of the received-wave signal ends. Optionally, the vehicle-dedicated object detection device **10A** may be configured to, when the detector 5 detects the object **A1** in a vicinity of the vehicle, notify a driver of presence of the object **A1** in the vicinity of the vehicle by sounds, for example.

The detector **5** includes a calculator for calculating a distance from the wave transceiver **1** to the object **A1**. The calculator is configured to calculate the distance from the wave transceiver **1** to the object **A1**, based on a time period (hereinafter referred to as "detection time period") **T0** (shown in **FIG. 2A**) from the time at which the wave transceiver **1** starts to transmit the ultrasonic wave to a time at which the detector **5** detects the object **A1** in the vicinity of the vehicle. Note that, in **FIG. 2B**, t4 represents a time at which the detector **5** detects the object **A1** in the vicinity of the vehicle.

A speed of a sound traveling in air (i.e., speed of sound) c [m/s] can be calculated by the following **equation (1),** wherein **X** [°C] represents a temperature of air.

**[FORMULA 1]**

$$c = 331.5 + 0.61 \times X \cdots (1)$$

Therefore, the distance **Y** [m] from the wave transceiver 1 to the object **A1** can be calculated by the following **equation (2)**, wherein the detection time period **T0** is **Z** [s].

**[FORMULA 2]**

$$Y = \frac{c \times Z}{2} = \frac{(331.5 + 0.61 \times X) \times Z}{2} \cdots (2)$$

Accordingly, in the vehicle-dedicated object detection device **10A**, the detector **5** can calculate the distance from the wave transceiver **1** to the object **A1**. In other words, the vehicle-dedicated object detection device **10A** can calculate the distance from the vehicle to the object **A1** with the detector **5**. Note that, the temperature **X** outside the vehicle (temperature of the outside air) may be measured with a temperature sensor or the like, for example.

The vehicle-dedicated object detection device **10A** may decrease a volume of a sound for notifying a driver, when the distance from the vehicle to the object **A1** calculated by the detector **5** is longer than a first prescribed distance within a detection distance range preliminarily-determined, for example. The vehicle-dedicated object detection device **10A** may increase a volume of a sound for notifying a driver, when the distance from the vehicle to the object **A1** calculated by the detector **5** is shorter than a second prescribed distance within the detection distance range preliminarily-determined, for example. In summary, the vehicle-dedicated object detection device **10A** may change how to notify a driver depending on a length of the distance from the vehicle to the object **A1** calculated by the detector **5**. Thus, the vehicle-dedicated object detection device **10A** can notify a driver of a length of the distance from the vehicle to the object **A1**, for example.

The determiner **7** is configured to, based on an amplitude of the received-wave signal in a time period (hereinafter referred to as "first time period") **T1** (shown in **FIG. 2A** and **FIG. 3A**) from the time at which the wave transceiver **1** starts to transmit the ultrasonic wave, to the detection start time **t3,** determine whether the wave transceiver **1** is dirty. In more detail, the determiner **7** determines that the wave transceiver **1** is dirty, when an angle θ**1** to θ**3** (shown in **FIG. 3A** to **FIG. 3C**) between a first straight line **H1** and a second straight line **H2** derived from the received-wave signal is smaller than a given angle (hereinafter referred to as "given first angle") preliminarily-determined. The first straight line **H1** is defined as a straight line interconnecting a first point **P1** at which the amplitude has a maximum value and a second point **P2** at which the amplitude has a minimum value with regard to the received-wave signal at the time (represented by **t1** in **FIG. 3C**) at which the wave transceiver **1** starts to transmit the ultrasonic wave. The second straight line **H2** is defined as a straight line interconnecting a third point **P3** at which the amplitude of the received-wave signal is equal to a threshold value **V$_T$** preliminarily-determined and the second point **P2**. The expression "the wave transceiver **1** is dirty" may mean that there is dirt on a transmitting and receiving surface (i.e., a surface allowing transmission and reception of the ultrasonic wave) for the ultrasonic wave of the wave transceiver **1**, for example. Note that, when the determiner **7** determines that the wave transceiver 1 is dirty, the vehicle-dedicated object detection device **10A** may notify a driver without performing detection of the object **A1**, for example.

In the vehicle-dedicated object detection device **10A**, the given first angle is set to an angle equal to θ**1** shown in **FIG. 3A,** for example. θ**1** shown in **FIG. 3A** is 30 [degrees], for example. Further, in the vehicle-dedicated object detection device **10A,** the threshold value **V$_T$** is set to 2.27 [V], for example. Note that, **t$_{n1}$** to **t$_{n3}$** respectively shown in **FIG. 3A** to **FIG. 3C** represent a time at which the amplitude of the received-wave signal reaches the threshold value **V$_T$**. Further, **V$_{max}$** shown in **FIG. 3A** to **FIG. 3C** represents a maximum value of the amplitude of the received-wave signal. Further, **V$_{min}$** shown in **FIG. 3A** to **FIG. 3C** represents a minimum value of the amplitude of the received-wave signal. Optionally, in the vehicle-dedicated object detection device **10A**, the maximum value **V$_{max}$** is set to 5 [V], for example. In the vehicle-dedicated object detection device **10A**, the minimum value **V$_{min}$** is set to 1.8 [V], for example. **FIG. 3A** shows a waveform of the received-wave signal in a case where the wave transceiver **1** is not dirty. **FIG. 3B** and **FIG. 3C** show different waveforms of the received-wave signal in a case where the wave transceiver **1** is dirty.

The angle θ**1** [degrees] between the first straight line **H1** and the second straight line **H2** derived from the received-wave signal shown in **FIG. 3A** can be calculated by the following **equation (3).**

**[FORMULA 3]**

$$\theta1 = \tan^{-1}\left( \frac{t_{n1} - t1}{V_T - V_{\min}} \right) \cdots (3)$$

The angle θ**2** [degrees] between the first straight line **H1** and the second straight line **H2** derived from the received-wave signal shown in **FIG. 3B** can be calculated by the following **equation (4)**.

**[FORMULA 4]**

$$\theta2 = \tan^{-1}\left( \frac{t_{n2} - t1}{V_T - V_{\min}} \right) \cdots (4)$$

The angle θ**3** [degrees] between the first straight line **H1** and the second straight line **H2** derived from the received-wave signal shown in **FIG. 3C** can be calculated by the following **equation (5).**

**[FORMULA 5]**

$$\theta3 = \tan^{-1}\left( \frac{t_{n3} - t1}{V_T - V_{\min}} \right) \cdots (5)$$

The detector **5** is configured to, when the determiner **7** determines that the wave transceiver **1** is not dirty and when a current time passes the detection start time **t3** preliminarily set by the setter **6**, start detection of the object **A1** and calculation of the distance from the wave transceiver **1** to the object **A1**.

Accordingly, in the vehicle-dedicated object detection device **10A**, the determiner **7** determines whether the wave transceiver **1** is dirty before the detector **5** starts detection of the object **A1**. Therefore, it is possible to suppress false detection of the object **A1** caused by dirt on the wave transceiver **1** as a result of attachment of unwanted substances, for example.

The determiner **7** determines that the wave transceiver **1** is not dirty, when the angle θ**1** to θ**3** between the first straight line **H1** and the second straight line **H2** derived from the received-wave signal is larger than the given first angle. Further, the determiner **7** determines that disconnection occurs between the wave transceiver **1** and the receiver **4**, when the angle θ**1** to θ**3** between the first straight line **H1** and the second straight line **H2** derived from the received-wave signal is smaller than a given second angle preliminarily-determined. In the vehicle-dedicated object detection device **10A**, the given second angle is set to an angle equal to θ**3** shown in **FIG. 3C**. θ**3** shown in **FIG. 3C** is 20 [degrees], for example. Thus, the vehicle-dedicated object detection device **10A** can determine whether a malfunction occurs in the vehicle-dedicated object detection device **10A**, based on the angle θ**1** to θ**3** between the first straight line **H1** and the second straight line **H2** derived from the received-wave signal.

Optionally, the determiner **7** may be configured to, when a second time period **T2** (shown in **FIG. 3B**) during which the amplitude of the received-wave signal in the first time period **T1** is greater than the threshold value **V_T** preliminarily-determined is equal to or longer than first given time, determine that the wave transceiver **1** is dirty. The first given time is 1.5 [ms], for example. The first given time may be defined as time (hereinafter referred to as "first time") necessary for the ultrasonic wave from the wave transceiver **1** to travel a double of a minimum detection distance preliminarily-determined. The minimum detection distance is 0.2 [m], for example. In this case, the first time may be set to 150 [μs], for example, and this value is only an example and there is no intent to limit the first time to this value.

Optionally, the determiner **7** may be configured to, when a third time period **T3** (shown in **FIG. 3B**) from the time at which the wave transceiver **1** starts to transmit the ultrasonic wave to a time at which the amplitude of the received-wave signal in the first time period **T1** exceeds the threshold value **V_T** preliminarily-determined is shorter than second given time, determine that the wave transceiver **1** is dirty. The second given time is 9.0 [ms], for example. The second given time may be defined as time (hereinafter referred to as "second time") necessary for the ultrasonic wave from the wave transceiver **1** to travel a double of a maximum detection distance preliminarily-determined. The maximum detection distance is 1.5 [m], for example. In this case, the second time may be set to 700 [μs], for example, and this value is only an example and there is no intent to limit the second time to this value.

Optionally, the determiner **7** may be configured to, when a number of times of events where the amplitude of the received-wave signal in the first time period **T1** exceeds the threshold value **V_T** preliminarily-determined is equal to or greater than a given number of times, determine that the wave transceiver **1** is dirty. In the vehicle-dedicated object detection device **10A**, the given number of times may be set to 5, and this value is only an example and there is no intent to limit the given number of times to this value.

Preferably, the determiner **7** may be configured to perform, an odd number of times, determination of whether the wave transceiver **1** is dirty, and make a final decision of whether the wave transceiver **1** is dirty, based on a majority of results obtained by performing the determination the odd number of times. For example, the determiner 7 may perform, three times, determination of whether the wave transceiver **1** is dirty. When there are two results indicating that the wave transceiver **1** is dirty, the determiner **7** determines that the wave transceiver **1** is dirty. Accordingly, the vehicle-dedicated object detection device **10A** can more suppress false detection of the object **A1** caused by dirt on the wave transceiver **1**.

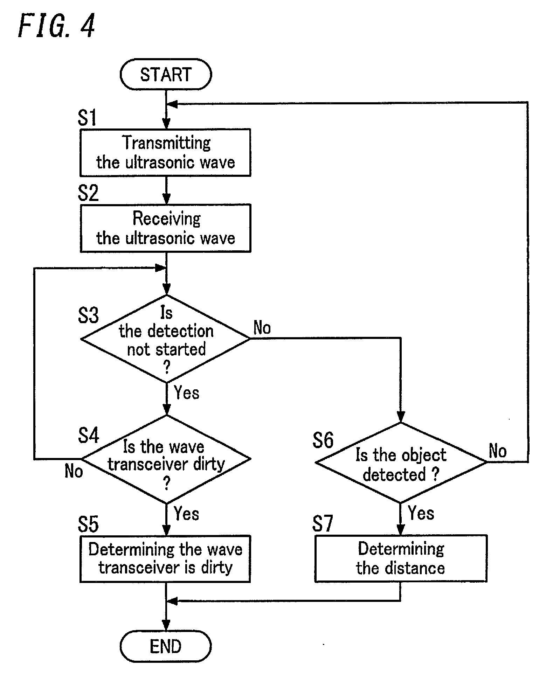

Hereinafter, one example of an operation of the vehicle-dedicated object detection device **10A** is described based on **FIG. 4**.

In the vehicle-dedicated object detection device **10A**, the transmitter **3** controls the wave transceiver **1** to transmit an ultrasonic wave (**S1** in **FIG. 4**), and subsequently the wave transceiver **1** receives the ultrasonic wave reflected by the object **A1** (**S2** in **FIG. 4**).

When receiving the received-wave signal from the receiver **4**, the detector **5** determines with the clock whether the current time is before or after the detection start time **t3** (**S3** in **FIG. 4**).

In the vehicle-dedicated object detection device **10A**, when the current time is before the detection start time **t3**, the determiner **7** determines whether the wave transceiver **1** is dirty (**S4** in **FIG. 4**). For example, when the angle θ**1** to θ**3** between the first straight line **H1** and the second straight line **H2** derived from the received-wave signal is smaller than the given first angle, the determiner **7** determines that the wave transceiver **1** is dirty (**S5** in **FIG. 4**). When determining that the wave transceiver **1** is not dirty, the determiner **7** determines with the clock whether the current time is before or after the detection start time **t3**, again (**S3** in **FIG. 4**).

In the vehicle-dedicated object detection device **10A**, when the current time is not before the detection start time **t3**, the detector **5** performs detection of the object **A1** in the vicinity of the vehicle, based on whether the reflected component **B1** derived from the object **A1** is present in the received-wave signal from the receiver **4** (**S6** in **FIG. 4**).

In the vehicle-dedicated object detection device **10A**, when the object **A1** is detected, the detector **5** calculates the distance from the wave transceiver 1 to the object **A1** (**S7** in **FIG. 4**). In contrast, in the vehicle-dedicated object detection device **10A**, when the object **A1** is not detected, the transmitter **3** controls the wave transceiver **1** to transmit an ultrasonic wave again (**S1** in **FIG. 4**).

Note that, in the vehicle-dedicated object detection device **10A**, the wave transceiver **1** is a wave transceiver for transmitting and receiving the ultrasonic wave, but may not be limited thereto and, for example, may be a wave transceiver for transmitting and receiving an electric wave. The vehicle-dedicated object detection device **10A** includes one wave transceiver **1**, but may include two or more wave transceivers **1** optionally. In the latter case, two or more wave transceiver **1** may be attached to the front side and the rear side of the vehicle, for example.

The vehicle-dedicated object detection device **10A** of the present embodiment described above includes: the wave transceiver **1** for transmitting and receiving an ultrasonic wave; and the controller **2** for controlling the wave transceiver **1**. The controller **2** includes: the transmitter 3 for transmitting a wave-transmitting signal for allowing the wave transceiver **1** to transmit an ultrasonic wave; and the receiver **4** for receiving a received-wave signal depending on the ultrasonic wave received by the wave transceiver **1**. The controller **2** further includes the detector **5** for performing detection of the object **A1** and calculation of the distance from the wave transceiver **1** to the object **A1**, based on the received-wave signal from the receiver **4**. The controller **2** further includes: the setter **6** for setting the detection start time **t3** at which the detector **5** starts detection of the object **A1;** and the determiner **7** for determining whether the wave transceiver **1** is dirty. The determiner **7** is configured to, based on the amplitude of the received-wave signal in the first time period **T1** from the time at which the wave transceiver **1** starts to transmit the ultrasonic wave to the detection start time **t3,** determine whether the wave transceiver **1** is dirty. The detector **5** is configured to, when the determiner **7** determines that the wave transceiver **1** is not dirty and when the current time passes the detection start time **t3** preliminarily set by the setter **6,** start detection of the object **A1** and calculation of the distance from the wave transceiver **1** to the object **A1**. Accordingly, the determiner **7** determines whether the wave transceiver **1** is dirty before the detector **5** starts detection of the object **A1**, and therefore the vehicle-dedicated object detection device **10A** can suppress false detection of the object **A1** caused by dirt on the wave transceiver **1**.

As described above, it is preferable that the determiner **7** be configured to, when the received-wave signal at the time at which the wave transceiver **1** starts to transmit the ultrasonic wave fulfills a condition where the angle θ1 to θ3 between the first straight line **H1** interconnecting the first point **P1** at which the amplitude of the received-wave signal has a maximum value and the second point **P2** at which the amplitude of the received-wave signal has a minimum value and the second straight line **H2** interconnecting the second point **P2** and the third point **P3** at which the amplitude of the received-wave signal is equal to the threshold value $V_T$ preliminarily-determined is smaller than the given angle preliminarily-determined, determine that the wave transceiver **1** is dirty.

Optionally, as described above, the determiner **7** may be configured to, when the second time period **T2** during which the amplitude of the received-wave signal in the first time period **T1** is greater than the threshold value $V_T$ preliminarily-determined is equal to or longer than first given time, determine that the wave transceiver **1** is dirty.

As described above, the first given time may be the first time necessary for the ultrasonic wave from the wave transceiver **1** to travel the double of the minimum detection distance preliminarily-determined.

Optionally, as described above, the determiner **7** may be configured to, when the third time period **T3** from the time at which the wave transceiver **1** starts to transmit the ultrasonic wave to the time at which the amplitude of the received-wave signal in the first time period **T1** exceeds the threshold value $V_T$ preliminarily-determined is shorter than second given time, determine that the wave transceiver **1** is dirty.

As described above, the second given time may be the second time necessary for the ultrasonic wave from the wave transceiver **1** to travel the double of the maximum detection distance preliminarily-determined.

Optionally, as described above, the determiner **7** may be configured to, when the number of times of events where the amplitude of the received-wave signal in the first time period **T1** exceeds the threshold value $V_T$ preliminarily-determined is equal to or greater than the given number of times, determine that the wave transceiver **1** is dirty.

As described above, it is preferable that the determiner **7** be configured to perform, the odd number of times, determination of whether the wave transceiver **1** is dirty, and make the final decision of whether the wave transceiver **1** is dirty, based on the majority of the results obtained by performing the determination the odd number of times. Therefore, the vehicle-dedicated object detection device **10A** can more suppress false detection of the object **A1** caused by dirt on the wave transceiver **1**.

**(Embodiment 2)**

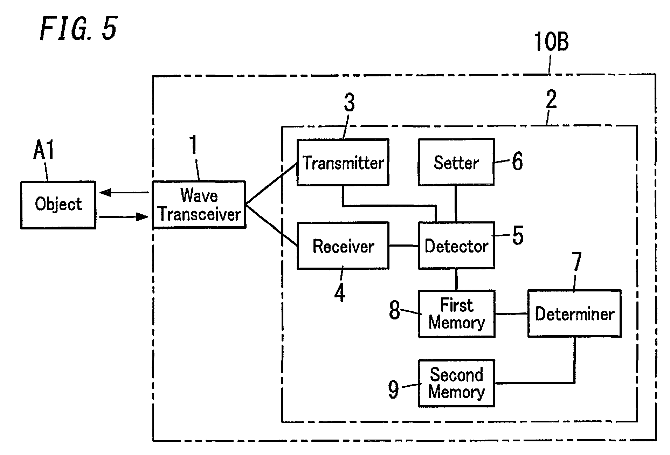

The vehicle-dedicated object detection device **10B** of the present embodiment is the same basic configuration as the vehicle-dedicated object detection device **10A** of **Embodiment 1** but is mainly different from the vehicle-dedicated object detection device **10A** in further including a first memory **8** and a second memory **9** as shown in **FIG. 5**. Note that, components common to the vehicle-dedicated object detection device **10B** and the vehicle-dedicated object detection device **10A** are designated by common reference sings to omit redundant explanations.

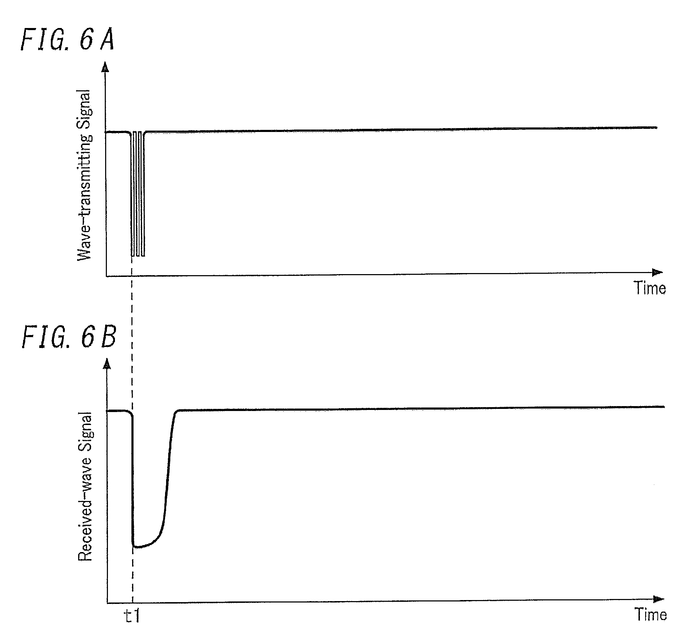

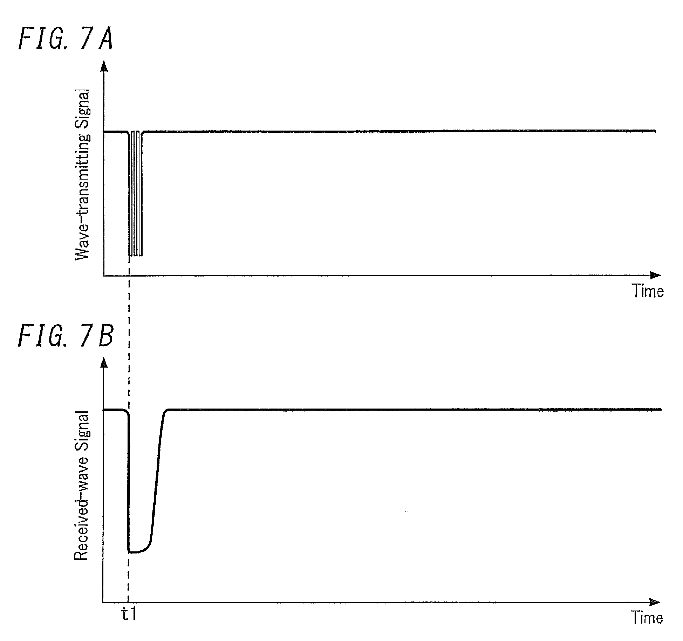

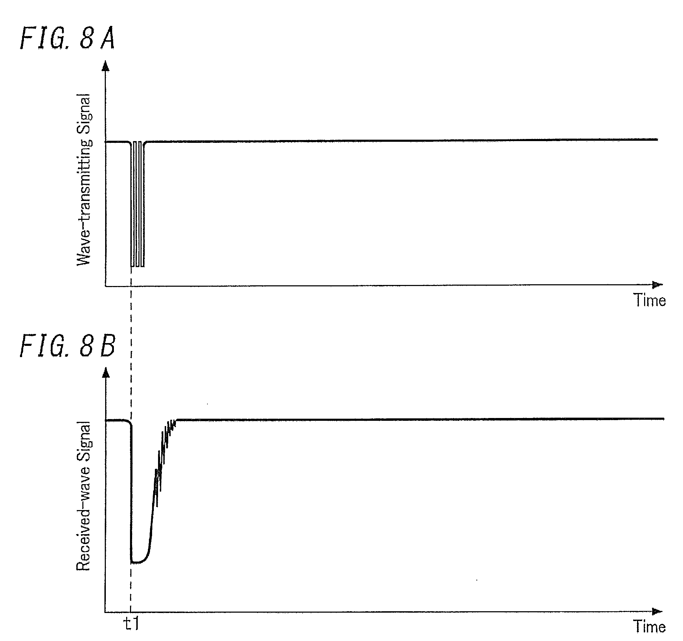

The vehicle-dedicated object detection device **10B** includes: the first memory **8** for storing information representing the received-wave signal from the receiver **4**; and the second memory **9** for preliminarily storing information representing a reference signal (shown in **FIG. 6B, FIG. 7B,** and **FIG. 8B**) which is defined as the received-wave signal from the receiver **4** in a case where the wave transceiver **1** is dirty. Note that, **FIG. 6A, FIG. 7A,** and **FIG. 8A** each represent the wave-transmitting signal from the wave transceiver **1**.

The determiner **7** is configured to determine whether the wave transceiver **1** is dirty, based on a result of pattern matching between the received-wave signal represented by the information stored in the first memory **8** and the reference signal represented by the information stored in the second memory **9**. In more detail, the determiner **7** calculates a degree of similarity between the received-wave signal represented by the information stored in the first memory **8** and the reference signal represented by the information stored in the second memory **9**, and determines that the wave transceiver **1** is dirty when the degree of similarity is equal to or greater than a reference value preliminarily-determined. Note that, the degree of similarity is defined as a degree to which the received-wave signal represented by the information stored in the first memory **8** and the reference signal represented by the information stored in the second memory **9** are similar.

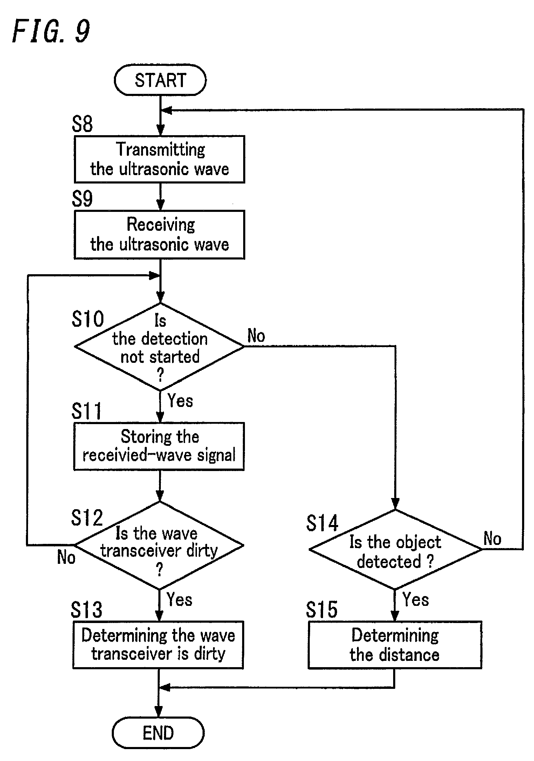

Hereinafter, one example of an operation of the vehicle-dedicated object detection device **10B** is described based on **FIG. 9**.

In the vehicle-dedicated object detection device **10B**, when the transmitter **3** controls the wave transceiver **1** to transmit an ultrasonic wave (**S8** in **FIG. 9**), the wave transceiver **1** receives the ultrasonic wave reflected by the object **A1** (**S9** in **FIG. 9**).

When receiving the received-wave signal from the receiver **4**, the detector **5** determines with the clock whether the current time is before or after the detection start time **t3** (**S10** in **FIG. 9**).

In the vehicle-dedicated object detection device **10B**, when the current time is before the detection start time **t3**, the detector **5** stores information representing the received-wave signal from the receiver **4**, in the first memory **8** (**S11** in **FIG. 9**). Then, the determiner **7** compares the received-wave signal represented by the information stored in the first memory **8** with the reference signal represented by the information stored in the second memory **9**, and thereby determines whether the wave transceiver **1** is dirty (**S12** in **FIG. 9**). When the degree of similarity between the received-wave signal represented by the information stored in the first memory **8** and the reference signal represented by the information stored in the second memory **9** is equal to or greater than the reference value preliminarily-determined, the determiner **7** determines that the wave transceiver **1** is dirty (**S13** in **FIG. 9**). When determining that the wave transceiver **1** is not dirty, the determiner **7** determines with the clock whether the current time is before or after the detection start time **t3**, again (**S10** in **FIG. 9**).

In the vehicle-dedicated object detection device **10B**, when the current time is not before the detection start time **t3**, the detector **5** performs detection of the object **A1** in the vicinity of the vehicle, based on whether the reflected component **B1** derived from the object **A1** is present in the received-wave signal from the receiver **4** (**S14** in **FIG. 9**).

In the vehicle-dedicated object detection device **10B**, when the object **A1** is detected, the detector **5** calculates the distance from the wave transceiver **1** to the object **A1** (**S15** in **FIG. 9**). In contrast, in the vehicle-dedicated object detection device **10B**, when the object **A1** is not detected, the transmitter **3** controls the wave transceiver **1** to transmit an ultrasonic wave again (**S8** in **FIG. 9**).

The vehicle-dedicated object detection device **10B** of the present embodiment described above further includes: the first memory **8** for storing information representing the received-wave signal from the receiver **4**; and the second memory **9** for storing information representing the reference signal defined as the received-wave signal in a case where the wave transceiver **1** is dirty. The determiner **7** is configured to determine whether the wave transceiver **1** is dirty, based on a result of pattern matching between the received-wave signal represented by the information stored in the first memory **8** and the reference signal represented by the information stored in the second memory **9**. Therefore, the vehicle-dedicated object detection device **10B** also can suppress false detection of the object **A1** caused by dirt on the wave transceiver **1**.

As apparent from the above embodiments, the vehicle-dedicated object detection device (**10A**) of the first aspect according to the present invention includes: a wave transceiver (**1**) for transmitting and receiving an ultrasonic wave; and a controller (**2**) for controlling the wave transceiver (**1**). The controller (**2**) includes: a transmitter (**3**) for transmitting a wave-transmitting signal for allowing the wave transceiver (**1**) to transmit an ultrasonic wave; and a receiver (**4**) for receiving a received-wave signal depending on the ultrasonic wave received by the wave transceiver (**1**). The controller (**2**) further includes a detector (**5**) for performing detection of an object (**A1**) and calculation of a distance from the wave transceiver (**1**) to the object (**A1**), based on the received-wave signal from the receiver (**4**). The controller (**2**) further includes: a setter (**6**) for setting a detection start time (**t3**) at which the detector (**5**) starts detection of the object (**A1**); and a determiner (**7**) for determining whether the wave transceiver (**1**) is dirty. The determiner (**7**) is configured to, based on an amplitude of the received-wave signal in a first time period (**T1**) from a time at which the wave transceiver (**1**) starts to transmit the ultrasonic wave to the detection start time (**t3**), determine whether the wave transceiver (**1**) is dirty. The detector (**5**) is configured to, when the determiner (**7**) determines that the wave transceiver (**1**) is not dirty and when a current time passes the detection start time (**t3**) preliminarily set by the setter (**6**), start detection of the object (**A1**) and calculation of the distance from the wave transceiver (**1**) to the object (**A1**).

According to the first aspect, the determiner (**7**) determines whether the wave transceiver (**1**) is dirty before the detector (**5**) starts detection of the object (**A1**), and therefore the vehicle-dedicated object detection device (**10A**) can suppress false detection of the object (**A1**) caused by dirt on the wave transceiver (**1**).

In the vehicle-dedicated object detection device (**10A**) of the second aspect according to the present invention, realized in combination with the first aspect, the determiner (**7**) may be preferably configured to, when the received-wave signal at the time at which the wave transceiver (**1**) starts to transmit the ultrasonic wave fulfills a condition where an angle (θ**1** to θ**3**) between a first straight line (**H1**) interconnecting a first point (**P1**) at which the amplitude of the received-wave signal has a maximum value and a second point (**P2**) at which the amplitude of the received-wave signal has a minimum value and a second straight line (**H2**) interconnecting the second point (**P2**) and a third point (**P3**) at which the amplitude of the received-wave signal is equal to a threshold value (**V$_T$**) preliminarily-determined is smaller than a given angle preliminarily-determined, determine that the wave transceiver (**1**) is dirty.

In the vehicle-dedicated object detection device (**10A**) of the third aspect according to the present invention, realized in combination with the first aspect, the determiner (**7**) may be configured to, when a second time period (**T2**) during which the amplitude of the received-wave signal in the first time period (**T1**) is greater than the threshold value (**V$_T$**) preliminarily-determined is equal to or longer than first given time, determine that the wave transceiver (**1**) is dirty.

In the vehicle-dedicated object detection device (**10A**) of the fourth aspect according to the present invention, realized in combination with the third aspect, the first given time may be defined as time necessary for the ultrasonic wave from the wave transceiver (**1**) to travel a double of a minimum detection distance preliminarily-determined.

In the vehicle-dedicated object detection device (**10A**) of the fifth aspect according to the present invention, realized in combination with the first aspect, the determiner (**7**) may be configured to, when a third time period (**T3**) from the time at which the wave transceiver (**1**) starts to transmit the ultrasonic wave to a time at which the amplitude of the received-wave signal in the first time period (**T1**) exceeds the threshold value (**V$_T$**) preliminarily-determined is shorter than second given time, determine that the wave transceiver (**1**) is dirty.

In the vehicle-dedicated object detection device (**10A**) of the sixth aspect according to the present invention, realized in combination with the fifth aspect, the second given time may be defined as time necessary for the ultrasonic wave from the wave transceiver (**1**) to travel a double of a maximum detection distance preliminarily-determined.

In the vehicle-dedicated object detection device (**10A**) of the seventh aspect according to the present invention, realized in combination with the first aspect, the determiner (**7**) may be configured to, when a number of times of events where the amplitude of the received-wave signal in the first time period (**T1**) exceeds a threshold value (**V$_T$**) preliminarily-determined is equal to or greater than a given number of times, determine that the wave transceiver (**1**) is dirty.

The vehicle-dedicated object detection device (**10B**) of the eighth aspect according to the present invention, realized in combination with the first aspect, further preferably may include: a first memory (**8**) for storing information representing the received-wave signal from the receiver (**4**); and a second memory (**9**) for storing information representing a reference signal defined as the received-wave signal in a case where the wave transceiver (**1**) is dirty. The determiner (**7**) may be preferably configured to determine whether the wave transceiver (**1**) is dirty, based on a result of pattern matching between the received-wave signal represented by the information stored in the first memory (**8**) and the reference signal represented by the information stored in the second memory (**9**).

According to the eighth aspect, the vehicle-dedicated object detection device (**10B**) can suppress false detection of the object (**A1**) caused by dirt on the wave transceiver (**1**).

In the vehicle-dedicated object detection device (**10A**) of the ninth aspect according to the present invention, realized in combination with any one of the second to eighth aspects, the determiner (**7**) may be preferably configured to perform, an odd number of times, determination of whether the wave transceiver (**1**) is dirty, and make a final decision of whether the wave transceiver (**1**) is dirty, based on a majority of results obtained by performing the determination the odd number of times.

According to the ninth aspect, the vehicle-dedicated object detection device (**10A**) can more suppress false detection of the object (**A1**) caused by dirt on the wave transceiver (**1**).

The present invention is described above with reference to preferable embodiments. However, such embodiment can be revised and/or modified in various ways by the skilled person to produce other embodiments, to an extent that the other embodiments fall within the scope of the present invention.

Claims

1.  A vehicle-dedicated object detection device, comprising:

    a wave transceiver for transmitting and receiving an ultrasonic wave; and
    a controller for controlling the wave transceiver, the controller including

    a transmitter for transmitting a wave-transmitting signal for allowing the wave transceiver to transmit an ultrasonic wave,
    a receiver for receiving a received-wave signal depending on the ultrasonic wave received by the wave transceiver,
    a detector for performing detection of an object and calculation of a distance from the wave transceiver to the object, based on the received-wave signal from the receiver,
    a setter for setting a detection start time at which the detector starts detection of the object, and
    a determiner for determining whether the wave transceiver is dirty,

    the determiner being configured to, based on an amplitude of the received-wave signal in a first time period from a time at which the wave transceiver starts to transmit the ultrasonic wave to the detection start time, determine whether the wave transceiver is dirty, and
    the detector being configured to, when the determiner determines that the wave transceiver is not dirty and when a current time passes the detection start time preliminarily set by the setter, start detection of the object and calculation of the distance from the wave transceiver to the object.

2.  The vehicle-dedicated object detection device of claim **1**, wherein

    the determiner is configured to, when the received-wave signal at the time at which the wave transceiver starts to transmit the ultrasonic wave fulfills a condition where an angle between a first straight line interconnecting a first point at which the amplitude of the received-wave signal has a maximum value and a second point at which the amplitude of the received-wave signal has a minimum value and a second straight line interconnecting the second point and a third point at which the amplitude of the received-wave signal is equal to a threshold value preliminarily-determined is smaller than a given angle preliminarily-determined, determine that the wave transceiver is dirty.

3.  The vehicle-dedicated object detection device of claim **1**, wherein

    the determiner is configured to, when a second time period during which the amplitude of the received-wave signal in the first time period is greater than the threshold value preliminarily-determined is equal to or longer than first given time, determine that the wave transceiver is dirty.

4.  The vehicle-dedicated object detection device of claim **3**, wherein

    the first given time is defined as time necessary for the ultrasonic wave from the wave transceiver to travel a double of a minimum detection distance preliminarily-determined.

5.  The vehicle-dedicated object detection device of claim **1**, wherein

    the determiner is configured to, when a third time period from the time at which the wave transceiver starts to transmit the ultrasonic wave to a time at which the amplitude of the received-wave signal in the first time period exceeds the threshold value preliminarily-determined is shorter than second given time, determine that the wave transceiver is dirty.

6.  The vehicle-dedicated object detection device of claim **5**, wherein

    the second given time is defined as time necessary for the ultrasonic wave from the wave transceiver to travel a double of a maximum detection distance preliminarily-determined.

7.  The vehicle-dedicated object detection device of claim **1**, wherein

    the determiner is configured to, when a number of times of events where the amplitude of the received-wave signal in the first time period exceeds a threshold value preliminarily-determined is equal to or greater than a given number of times, determine that the wave transceiver is dirty.

8.  The vehicle-dedicated object detection device of claim **1**, further comprising:

    a first memory for storing information representing the received-wave signal from the receiver; and
    a second memory for storing information representing a reference signal defined as the received-wave signal in a case where the wave transceiver is dirty,

the determiner being configured to determine whether the wave transceiver is dirty, based on a result of pattern matching between the received-wave signal represented by the information stored in the first memory and the reference signal represented by the information stored in the second memory.

9. The vehicle-dedicated object detection device of any one of claims 2 to 8, wherein

the determiner is configured to perform, an odd number of times, determination of whether the wave transceiver is dirty, and make a final decision of whether the wave transceiver is dirty, based on a majority of results obtained by performing the determination the odd number of times.

## FIG. 1

## FIG. 2A

## FIG. 2B

FIG. 3 A

FIG. 3 B

FIG. 3 C

*FIG. 4*

```
                    ┌──────────┐
                    │  START   │
                    └────┬─────┘
S1                       │
  ┌──────────────────────▼──────┐
  │      Transmitting           │
  │   the ultrasonic wave       │
  └──────────────┬──────────────┘
S2               │
  ┌──────────────▼──────────────┐
  │       Receiving             │
  │   the ultrasonic wave       │
  └──────────────┬──────────────┘
                 │
        S3     ◇ Is ◇        No
          ◇ the detection ◇──────────┐
          ◇ not started   ◇          │
               ◇  ?  ◇               │
                 │ Yes               │
                 │                   │
        S4   ◇ Is the wave ◇     S6  ◇ Is the object ◇  No
         ◇ transceiver dirty ◇    ◇  detected ?  ◇───────┐
          No  ◇   ?   ◇               │                  │
                 │ Yes              Yes                  │
S5               │            S7     │                   │
  ┌──────────────▼──────┐   ┌────────▼────────┐          │
  │ Determining the wave│   │  Determining    │          │
  │ transceiver is dirty│   │  the distance   │          │
  └──────────────┬──────┘   └────────┬────────┘          │
                 │                   │                   │
                 │◄──────────────────┘                   │
          ┌──────▼──────┐                                 │
          │    END      │                                 │
          └─────────────┘                                 │
```

FIG. 5

*FIG. 6 A*

Wave-transmitting Signal

Time

*FIG. 6 B*

Received-wave Signal

t1

Time

*FIG. 7A*

*FIG. 7B*

16

*FIG. 8 A*

*FIG. 8 B*

17

## FIG. 9

```
                    ( START )
                        │
   S8 ┌──────────────────────────┐ ◄──────────────────────┐
      │      Transmitting        │                         │
      │   the ultrasonic wave    │                         │
      └──────────────────────────┘                         │
   S9 ┌──────────────────────────┐                         │
      │        Receiving         │                         │
      │   the ultrasonic wave    │                         │
      └──────────────────────────┘                         │
                        │                                   │
          ┌─────────────┤                                   │
          │             ▼                                   │
  S10     │      ╱  Is the     ╲        No                  │
          │     ╱  detection    ╲──────────────┐           │
          │     ╲  not started  ╱               │           │
          │      ╲     ?       ╱                │           │
          │             │ Yes                   │           │
  S11     │    ┌──────────────────┐             │           │
          │    │   Storing the    │             │           │
          │    │ receivied-wave   │             │           │
          │    │     signal       │             │           │
          │    └──────────────────┘             │           │
          │             │                       │           │
  S12     │       ╱ Is the wave ╲     S14  ╱ Is the object ╲  No
          │  No  ╱  transceiver  ╲         ╲   detected ?  ╱───┘
          └─────╲     dirty      ╱          ╲             ╱
                 ╲      ?       ╱                  │ Yes
                        │ Yes                      │
  S13   ┌───────────────────────┐  S15  ┌──────────────────┐
        │ Determining the wave  │       │   Determining    │
        │  transceiver is dirty │       │   the distance   │
        └───────────────────────┘       └──────────────────┘
                        │                         │
                        │◄────────────────────────┘
                        ▼
                    ( END )
```

**INTERNATIONAL SEARCH REPORT**

| International application No. |
|---|
| PCT/JP2014/004337 |

A. CLASSIFICATION OF SUBJECT MATTER
*G01S7/526*(2006.01)i, *G01S7/52*(2006.01)i, *G01S15/93*(2006.01)i, *G08G1/16*(2006.01)i

According to International Patent Classification (IPC) or to both national classification and IPC

B. FIELDS SEARCHED

Minimum documentation searched (classification system followed by classification symbols)
G01S1/72-1/82, 3/80-3/86, 5/18-5/30, 7/00-7/64, 13/00-13/95, 15/00-15/96, 17/00-17/95

Documentation searched other than minimum documentation to the extent that such documents are included in the fields searched
Jitsuyo Shinan Koho         1922-1996    Jitsuyo Shinan Toroku Koho    1996-2014
Kokai Jitsuyo Shinan Koho   1971-2014    Toroku Jitsuyo Shinan Koho    1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2003-114277 A  (Nissan Motor Co., Ltd.),<br>18 April 2003 (18.04.2003),<br>paragraphs [0009] to [0026]; fig. 4, 5<br>(Family: none) | 1,8,9<br>2-7 |
| Y | JP 2005-233640 A  (Kurita Water Industries Ltd.),<br>02 September 2005 (02.09.2005),<br>paragraph [0009]<br>(Family: none) | 1,8,9 |
| Y | JP 2010-014472 A  (Shogo TANAKA),<br>21 January 2010 (21.01.2010),<br>paragraph [0004]<br>(Family: none) | 8 |

| ☒ | Further documents are listed in the continuation of Box C. | ☐ | See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    07 November, 2014 (07.11.14) | Date of mailing of the international search report<br>    18 November, 2014 (18.11.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/004337 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2012/137285 A1  (Mitsubishi Electric Corp.), 11 October 2012 (11.10.2012), paragraph [0076] & US 2014/0015706 A1    & EP 2696332 A1 & CN 103460263 A | 9 |
| A | JP 2011-022080 A  (Optex Co., Ltd.), 03 February 2011 (03.02.2011), entire text; all drawings & US 2012/0113410 A1    & EP 2455780 A1 & WO 2011/007855 A1 | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009234294 A